(19) **Europäisches Patentamt / European Patent Office / Office européen des brevets**

(11) **EP 2 307 490 B1**

(12) **FASCICULE DE BREVET EUROPEEN**

(45) Date de publication et mention
de la délivrance du brevet:
**20.11.2013 Bulletin 2013/47**

(51) Int Cl.:
**C08K 3/30** (2006.01)   **C08K 3/34** (2006.01)
**C08L 77/00** (2006.01)   **C08L 67/00** (2006.01)

(21) Numéro de dépôt: **09786033.2**

(22) Date de dépôt: **20.07.2009**

(86) Numéro de dépôt international:
**PCT/IB2009/006298**

(87) Numéro de publication internationale:
**WO 2010/013107 (04.02.2010 Gazette 2010/05)**

(54) **PROCEDE DE FABRICATION DE MATRICE POLYMERIQUE THERMOPLASTIQUE**

HERSTELLUNGSVERFAHREN FÜR THERMOPLASTISCHE POLYMERMATRIX

METHOD FOR MANUFACTURING A THERMOPLASTIC POLYMER MATRIX

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.07.2008 FR 0804335**

(43) Date de publication de la demande:
**13.04.2011 Bulletin 2011/15**

(73) Titulaire: **Rhodia Poliamida E Especialidades Ltda Sao Paulo - SP (BR)**

(72) Inventeurs:
• **HIDEKI DI PETTA, Daniel**
  **CEP : 04115-000 Sao Paulo (BR)**
• **KRIVTZOFF LAGÜENS, Karla**
  **CEP : 01423-001 Sao Paulo (BR)**
• **BEDORE DOS SANTOS, Léo Ricardo**
  **Sao Paulo (BR)**
• **CORDEIRO BASTOS, Tarcis**
  **Sao Paulo (BR)**
• **CANOVA, Thomas**
  **Sao Paulo (BR)**

(74) Mandataire: **Casalonga, Axel et al**
**Casalonga & Partners**
**Bayerstrasse 71-73**
**80335 München (DE)**

(56) Documents cités:
**WO-A-01/12678      DE-A1- 19 959 916**
**FR-A- 1 389 371      US-A- 3 511 801**

• **DATABASE WPI Week 200844 Thomson Scientific, London, GB; AN 2008-H00903 XP002544594 -& WO 2008/058429 A1 (BAI Z) 22 mai 2008 (2008-05-22) & WO 2008/058429 A (BAI ZHONGYUAN [CN]; ZHAO YINGTAO [CN]; CHUI XIANGHAO [CN]; WANG ZIXIAN) 22 mai 2008 (2008-05-22)**

Remarques:
Le dossier contient des informations techniques présentées postérieurement au dépôt de la demande et ne figurant pas dans le présent fascicule.

**Description**

La présente invention concerne un procédé de fabrication de matrice polymérique thermoplastique par ajout d'une suspension contenant de la tourmaline lors de la polymérisation de ladite matrice polymérique. L'invention concerne aussi différents articles obtenus par mise en forme de cette matrice polymérique, tels que des fils, fibres, filaments, films et articles moulés.

La demanderesse a mis au point un procédé de fabrication d'une composition polymérique thermoplastique par ajout d'une suspension contenant de la tourmaline et éventuellement également du sulfate de baryum pendant la polymérisation de ladite matrice polymérique.

Le procédé de l'invention permet notamment d'obtenir une très bonne dispersion et distribution de la tourmaline dans le polymère thermoplastique. Par ailleurs, l'introduction de la tourmaline à la synthèse permet d'éviter la formation d'agglomérats dans la matrice polymérique, qui engendre certains problèmes de dégradations au cours de la fabrication du polymère et/ou dé sa mise en forme, notamment dans le domaine textile. En effet, l'introduction de la tourmaline à la synthèse permet une bonne dispersion des particules dans la matrice ce qui évite l'obstruction des trous de filière et des média de filtrations. Ceci entraînait auparavant une augmentation de la pression des packs de filage et la casse des fils, fibres et/ou filaments obtenus.

La tourmaline, et le sulfate de baryum présentent également l'avantage d'être relativement inertes et de ne pas réagir avec la matrice polymérique. Ainsi ces composés ne causent pas de problème de dégradation, de coloration, de jaunissement des articles obtenus. La tourmaline, et le sulfate de baryum permettent également de satisfaire les propriétés recherchées au niveau du coût, de la facilité de mise en oeuvre et de l'introduction dans des matrices polymériques, telles que les matrices thermoplastiques. La tourmaline, ainsi que le sulfate de baryum, présentent également des propriétés d'absorption et d'émission dans la région infra rouge, et ils permettent de réduire la friction entre les organes de filages et les fils, sans apporter de matification à la composition polymérique.

La présente invention a pour premier objet un procédé de fabrication d'une composition à base de matrice polymérique thermoplastique contenant de la tourmaline, caractérisé par le fait que l'on introduit avant ou pendant la polymérisation de ladite matrice polymérique, une suspension contenant au moins ce composé.

La présente invention concerne aussi une matrice polymérique thermoplastique susceptible d'être obtenue par le procédé décrit précédemment.

Lorsque l'on met en oeuvre plusieurs composés, les différents composés peuvent être introduits sous forme d'une suspension contenant tous les composés, ou sous forme de plusieurs suspensions contenant chacune un composé.

La matrice polymérique thermoplastique peut être choisie dans le groupe comprenant : les polyamides ; les polyesters ; les polyvinyliques ; les chlorures de polyvinyle ; les acétates de polyvinyle ; les alcools polyvinylique ; les polymères acryliques tels que les copolymères PMMA, SAN, ABS ; les polyoléfines telles que le polyéthylène, le polypropylène et le polybutylène ; les dérivés cellulosiques tels que l'acétate de cellulose, les plastiques cellulose-ester ; les polyuréthanes ; leurs copolymères et/ou mélanges.

Comme polymère thermoplastique, on préfère notamment les polyamides, tels que le polyamide 6, le polyamide 6.6, le polyamide 11, le polyamide 12 ; et les polyesters, tels que le polyéthylène téréphtalate (PET), le polybutylène téréphtalate (PBT), le polytriméthylène téréphtalate (PTT), leurs copolymères et/ou leurs mélanges.

Comme polymères préférées de l'invention, on peut citer les polyamides et copolyamides semicristallins ou amorphes, tels que les polyamides aliphatiques, polyamides semi-aromatiques et plus généralement, les polyamides linéaires  obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères. Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame. Les compositions sont de préférence à base de polyamide 6, de polyamide 66, de mélanges et copolymères à base de ces polyamides. Il peut s'agir en particulier d'un copolymère polyamide 6.6/6.

Selon une variante particulière de l'invention, la matrice thermoplastique peut comprendre un polymère de type étoile, arbre, ou dendrimère, notamment ceux comprenant des chaînes macromoléculaires branchées et le cas échéant des chaînes macromoléculaires linéaires.

La matrice polymérique peut également comprendre des additifs généralement utilisés dans le domaine, pouvant être, par exemple des charges de renfort ou de remplissage, des agents ignifugeants, des stabilisants aux UV, à la chaleur, des pigments et des lubrifiants.

De nombreux procédés de polymérisation de matrices polymériques thermoplastiques connus de l'homme du métier peuvent être utilisés selon la présente invention. Ces procédés comprennent des spécificités en fonction de la matrice polymérique que l'on souhaite obtenir.

Ladite suspension comprenant de la tourmaline est préférentiellement introduite dans le milieu de polymérisation avant que la polymérisation n'ait proprement débutée ou alors que la polymérisation à déjà commencée, notamment lorsque le polymère présente un faible degré de polycondensation.

Pour la fabrication de polyamide 66, la polymérisation peut comprendre selon le procédé standard une étape de concentration du sel N et une étape de polycondensation comprenant les phases suivantes : une phase de distillation sous pression, une phase de décompression, une phase de finition et éventuellement une phase d'extrusion ou de mise en forme. La suspension contenant de la tourmaline est préférentiellement ajoutée au cours de la phase de distillation sous pression.

Pour la fabrication de polyamide 6, la polymérisation peut comprendre une étape de mélange du caprolactame fondu avec de l'eau et éventuellement des limiteurs de chaînes, une étape de chauffage, éventuellement une étape d'augmentation de la pression suivie d'une étape de décompression, éventuellement une étape de finition sous vide, une étape d'extraction, et une étape de séchage. Dans le cas du polyamide 6, la suspension contenant de la tourmaline est préférentiellement ajoutée lors de l'étape initiale de mélange du caprolactame fondu avec de l'eau et éventuellement des limiteurs de chaînes. Pour la fabrication de polyester, la polymérisation peut comprendre une étape de mélange, une étape de transestérification ou d'estérification, éventuellement une étape de concentration, et une étape de polycondensation sous vide. Dans le cas du polyester, la suspension contenant de la tourmaline est préférentiellement ajoutée avant ou juste avant la phase de polycondensation.

La suspension de l'invention peut comprendre, outre la tourmaline, du sulfate de baryum, de l'eau et/ou au moins un composé choisi parmi le groupe comprenant : des agents tensio-actifs, des solvants organiques et/ou des monomères de matrice polymérique. On préfère notamment une suspension comprenant au moins la tourmaline de l'eau et un tensioactif.

La suspension est appelée suspension aqueuse lorsqu'elle comprend en majorité de l'eau. Une suspension aqueuse peut également comprendre un ou plusieurs autres composés mentionnés ci-dessus. On peut également utiliser des suspensions ne comprenant pas d'eau, mais un autre liquide, tel que par exemple un solvant organique et/ou un monomère de matrice polymérique, tel que de l'éthylène glycol.

La suspension peut ainsi comprendre des agents tensioactifs, tels que des agents tensioactifs anioniques (polyphosphates, pyrophosphates, alkylesters sulfonates, alkylsulfates, alkylamides sulfates, sels d'acides gras saturés ou insaturés ...), non-ioniques (dérivés polyalcoxylés d'alkylphénols, d'acides gras, d'amines, d'amides d'acides gras, d'amidoamines, les condensats d'oxyde d'éthylène ou de propylène avec l'éthylènediamine, les alkylpolyglucosides ...), amphotères (alkylamphoacétates ...) ou zwitterioniques (bétaines). Ces agents peuvent représenter de 0,05 à 1 %, de préférence de 0,1 à 0,7 %, plus préférentiellement 0,2 à 0, 5 % en poids par rapport au poids total de la suspension, avant décantation. On entend par tensioactif un composé qui modifie la tension superficielle de la suspension.

Ladite suspension peut également comprendre des solvants organiques, tels que les alcools aliphatiques, aromatiques, les éthers de glycol (méthanol, éthanol, propanol, isopropanol, propanediol, éthylène glycol, glycérol, benzyl alcool, butoxy propoxy propanol...). Ces solvants peuvent représenter de 0,1 à 50 % du poids de la suspension.

A titre de monomères de matrice polymérique, on peut citer par exemple le caprolactame, notamment pour la fabrication de polyamides, ou l'éthylène glycol, notamment pour la fabrication de polyesters. Ces monomères peuvent notamment représenter de 0,1 à 70 % du poids de la suspension, préférentiellement de 15 à 60 %. Préférentiellement, les monomères de matrice polymérique sont ceux utilisés pour la fabrication de la matrice polymérique lors de la phase de polymérisation.

La suspension comprend, outre la tourmaline, préférentiellement de l'eau et éventuellement du caprolactame et/ou un tensioactif, plus préférentiellement de l'eau et un tensioactif.

Pour la fabrication de polyamide 6, on utilise préférentiellement une suspension aqueuse comprenant de la tourmaline et éventuellement du caprolactame, et éventuellement un tensioactif. Pour la fabrication de polyamide 66, on utilise préférentiellement une suspension aqueuse comprenant de la tourmaline et éventuellement un tensioactif.

Pour la fabrication de polyéthylène téréphtalate, on utilise préférentiellement une suspension comprenant de la tourmaline dans de l'éthylène glycol et éventuellement un tensioactif.

Selon l'invention, la tourmaline et le sulfate de baryum peuvent être sous la forme de particules. Préférentiellement, ils sont sous forme de particules consistant essentiellement en des cristaux de ce composé , éventuellement enrobées par au moins un composé minéral et/ou organique.

Les particules de tourmaline et/ou de sulfate de baryum peuvent présenter un diamètre moyen (d50) inférieur ou égal à 2 $\mu$m, préférentiellement inférieur ou égal à 0,8 $\mu$m, plus préférentiellement de 0,1 à 0,5 $\mu$m, particulièrement un diamètre moyen d'environ 0,3 à 0,5 $\mu$m.

La suspension peut comprendre de 5 à 50 % en poids de tourmaline et éventuellement sulfate de baryum, préférentiellement de 10 à 40%, par rapport au poids total de la suspension.

La proportion en poids de tourmaline et éventuellement de sulfate de baryum par rapport au poids total de la composition polymérique peut être de 0,01 à 10 %, préférentiellement de 0,05 à 7 %, encore plus préférentiellement de 0,1 à 5 %, particulièrement de 0,2 à 3 %.

Ladite suspension peut être fabriquée par un procédé comprenant au moins les étapes suivantes :

a) on met en contact au moins de la tourmaline et éventuellement du sulfate de baryum avec de l'eau et/ou au moins un composé choisi parmi le groupe comprenant : des agents tensio-actifs, des solvants organiques et/ou des monomères de matrice polymérique ;

b) on agite le mélange obtenu à l'étape a) afin de disperser de façon homogène la tourmaline et éventuellement le sulfate de baryum dans l'eau, notamment pour réduire la taille des agglomérats ; et

c) on filtre la suspension obtenue en utilisant un filtre de seuil d'au moins 10 $\mu$m, préférentiellement d'au moins 5 $\mu$m, plus préférentiellement d'au moins 3 $\mu$m

On entend par filtre de seuil, un filtre qui ne laisse pas passer des particules ayant un diamètre supérieur à une valeur en $\mu$m. Par exemple, un filtre de seuil 1 $\mu$m ne laisse pas passer de particules ayant un diamètre supérieur à 1 $\mu$m.

Il est notamment possible de diluer et/ou de laisser décanter la suspension au cours du procédé de fabrication.

D'une manière préférentielle, la suspension est filtrée plusieurs fois à l'étape c), notamment en la faisant passer à travers plusieurs filtres placés en série et en utilisant une boucle de re-circulation. On peut notamment placer un filtre de 10 $\mu$m et un filtre de 5 $\mu$m en série et faire circuler la suspension dans la boucle pendant quelques heures. On peut aussi placer plusieurs boucles de circulation, identiques ou différentes, en série.

La présence de tourmaline et de sulfate de baryum dans une matrice polymérique peut être déterminée par différentes méthodes bien connues de l'homme du métier, telles qu'une analyse thermogravimétrique (méthode des cendres), ou par analyse directe qualitative des éléments, par exemple du baryum, par spectrométrie de fluorescence X ; éventuellement suivi d'un dosage élémentaire quantitatif de l'élément (par exemple baryum) après minéralisation sulfonitrique par spectrométrie atomique, de façon à en déduire la quantité de composé. Il est également possible de déterminer quantitativement l'élément (par exemple baryum) par microanalyse et/ou de procéder à une dissolution de la matrice polymérique dans un solvant, une filtration de l'additif et une analyse par diffraction X.

La présente invention concerne également l'utilisation de la composition à base de matrice thermoplastique contenant de la tourmaline et éventuellement du sulfate de baryum pour la fabrication d'articles, tels que des fils, fibres et/ou filaments, films et articles moulés. Les compositions peuvent être mises en forme d'articles directement après la polymérisation, sans étapes intermédiaires de solidification et de refonte. Elles peuvent aussi êtres mises en forme de granulés, destinés à subir une refusion pour mise en forme définitive ultérieure, par exemple pour la fabrication d'articles moulés ou pour la fabrication de fils, fibre et/ou filaments.

Tous les procédés de filage en fondu peuvent être utilisés notamment en faisant passer la composition de l'invention à travers des filières comprenant un ou plusieurs orifices.

Pour la fabrication de fils multifilamentaires, on cite les procédés de filage ou filage-étirage ou filage-étirage-texturation intégrés ou non, quelle que soit la vitesse de filage. On peut produire les fils par filage haute vitesse, à vitesse de filage supérieure ou égale à 3000 m/min, préférentiellement supérieure ou égale à 4000 m/min. De tels procédés sont souvent désignés par les termes suivants: POY (partialy oriented yarn), FOY (fully oriented yarn), FEI (filage-étirage-intégré), HOY (higly oriented yarn avec une vitesse supérieure à 5500 m/min). Ces fils peuvent de plus être texturés, selon l'usage auquel ils sont destinés. Les fils obtenus par ces procédés conviennent tout particulièrement à la réalisation de surfaces textiles, tissées ou tricotées.

Selon l'invention, la matrice polymérique thermoplastique peut être utilisée pour la fabrication de fils multifilamentaires ayant un titre inférieur ou égal à 6 dtex/filament, plus préférentiellement inférieur ou égal à 1,5 dtex/filament.

Pour la fabrication de fibres, les filaments peuvent par exemple être réunis sous forme de mèche ou de nappe, directement après le filage ou en reprise, étirés, texturés ou frisés et coupés. Les fibres obtenues peuvent être utilisées pour la fabrication de non tissés ou de filés de fibres. Les compositions peuvent également être utilisées pour la fabrication de flock.

Les fils, fibres et/ou filaments de l'invention peuvent subir divers traitements, tels que par exemple l'étirage en une étape continue ou en reprise, le dépôt d'ensimage, l'huilage, l'entrelacement, la texturation, le frisage, l'étirage, le traitement thermique de fixation ou de relaxation, le moulinage, le retordage, et/ou la teinture. Pour la teinture, on cite en particulier les procédés de teinture en bain ou par jets. Les teintures préférées sont les teintures acides, métallifères ou non métallifères.

La présente invention concerne aussi un article obtenu au moins à partir de fils, fibres et/ou filaments tel que définis précédemment. Ces articles peuvent être des étoffes ou des surfaces textiles, telles que des surfaces tissées, tricotées, non-tissées ou tapis. Ces articles peuvent être par exemple les moquettes, les tapis, les revêtements d'ameublement, les revêtements de surface, les canapés, les rideaux, la literie, les matelas et oreillers, les vêtements et les matériaux textiles médicaux.

La présente invention concerne aussi des articles obtenus par mise en forme d'une composition de l'invention par un procédé choisi dans le groupe comprenant un procédé d'extrusion, tel que l'extrusion de feuilles et de films, de moulage, tel que le moulage par compression, et d'injection, tel que le moulage par injection.

Des films peuvent ainsi être obtenus par les procédés mentionnés précédemment en utilisant une filière plate.

Préférentiellement, la matrice thermoplastique est composée de polyamide, de polyester ou de polyoléfine. Les films obtenus peuvent subir une ou différentes étapes de traitements, telles qu'un étirage unidimensionnel ou bidimensionnel, un traitement thermique de stabilisation, un traitement antistatique ou un ensimage.

La présente invention concerne aussi une suspension contenant un composé silicate et/ou sulfate de baryum.

Le terme et/ou inclut les significations et, ou ainsi que toutes les autres combinaisons possibles des éléments connectés à ce terme.

D'autres détails ou avantages de l'invention apparaîtront plus clairement au vu des exemples donnés ci-dessous uniquement à titre indicatif.

## EXEMPLES

### Exemple 1 : Préparation d'une suspension de tourmaline (slurry)

La préparation de la suspension de tourmaline à 39% a été faite de la manière suivante :

On prépare une solution de pyrophosphate de sodium dans l'eau, à une concentration de 0,18% en poids, par mélange de 8,52 kg d'eau déminéralisée et de 15,3 g de pyrophosphate de sodium. Le mélange est réalisé sous agitation pendant 15 minutes à une vitesse d'agitation de 1000 tours par minute, dans une capacité équipée d'un disperseur haute vitesse. 10 kg de tourmaline sous forme de poudre sont ajoutés de façon à obtenir 18,5 kg de suspension à 54%. Après la fin de l'ajout, la suspension est maintenue sous agitation (2000 tours par minute) pendant 70 minutes. La suspension est ensuite diluée par addition de 7,1 kg d'une solution aqueuse à 0,18% en poids de pyrophosphate de sodium, de façon à obtenir une suspension à 39%. La suspension à 39 % est ensuite transférée dans un bac de décantation (20°C) d'une hauteur de décantation de 16 cm, où elle reste pendant 68 heures.

### Exemple 2: PA 66 comprenant de la tourmaline introduite à la polymérisation

On fabrique un copolymère à base de polyamide 66 à partir de 1395,9 kg d'une solution aqueuse d'un sel d'adipate d'hexaméthylène diamine (sel N) à laquelle sont ajoutés notamment 30,2 kg de caprolactame en solution aqueuse. :

Le polyamide est fabriqué selon un procédé classique comprenant une étape de concentration de la solution dans l'évaporateur et une étape de polycondensation dans un réacteur autoclave non agité, qui comprend les phases suivantes :

- une phase de distillation sous pression, sous un palier en pression de 18,5 bars,
- une phase de décompression de 18,5 bars à 1 bar avec une température finale d'au moins 264 °C
- une phase de finition avec une température finale est d'au moins 268 °C.
- une phase d'extrusion sous une pression d'azote de 5,5 bars.

Au cours de la phase de distillation sous pression après 10 min on ajoute les 12,5 kg de la suspension aqueuse de tourmaline préparée à l'exemple 1, puis la suspension aqueuse de $TiO_2$ à 20%. On obtient un copolymère à base de PA66 comprenant 2,5 % en poids de motifs du polyamide 6.

Le polymère obtenu est analysé par les méthodes usuelles et ses caractéristiques sont :

- Viscosité relative = 44 (à 8,4% dans l'acide formique 90% à 25°C)
- Groupes terminaux amines = 42,7 meq/kg
- Groupes terminaux carboxyliques = 78,5 meq/kg
- tourmaline = 0,2 % (mesuré par le taux de cendres)

### Exemple 3: Extrusion du PA 66 avec tourmaline introduite en polymérisation

Le polyamide obtenu à l'exemple 2, ayant une composition massique finale de 98,3% de polyamide, 1,5% de $TiO_2$ et 0,2% de tourmaline, est refondu dans une extrudeuse monovis et extrudé à 290°C, à travers un élément de filtration. L'élément de filtration est composé d'un reps de surface 2 cm$^2$ et de seuil 18 micra, commercialisé par la société Açoplast sous la référence Y-610.

### Exemple Comparatif 4 : Extrusion du PA 66 avec addition de tourmaline via masterbatch

Un polyamide PA 66 contenant 1,5 % de $TiO_2$ produit par un procédé similaire à celui décrit dans l'exemple 2 est mélangé à un masterbatch de tourmaline (20% de tourmaline dans le même polyamide 66), selon une proportion massique de 99% de PA66 et 1% de masterbatch de tourmaline, de façon à ce que la composition massique finale soit de 98,3% de polyamide 66, 1,5 % de $TiO_2$ et 0,2% de tourmaline. Le mélange est ensuite refondu dans une extrudeuse monovis et extrudé dans les mêmes conditions qu'à l'exemple 3.

On détermine un index de filtrabilité F des compositions polyamide 66 des exemples 3 et 4 comparatif à travers le pack de filage, calculé comme suit à partir de paramètres mesurés ( notamment la pression de pack) :

$$F=(Pf-Pi)/(Mt*Pi)$$

Avec :

- Pi est la pression de pack initiale (bars)
- Pf est la pression de pack finale (bars)
- Mt est la masse totale de composition extrudée

L'index de filtrabilité et les paramètres mesurés pour les compositions des exemples 3 et 4 comparatif sont rassemblés dans le tableau 2 ci-dessous.

Tableau 2

|  | Exemple Comparatif 4 (1,5% $TiO_2$ et 0,2% tourmaline) | Exemple 3 (1,5% $TiO_2$ et 0,2% tourmaline) |
|---|---|---|
| Pi (bars) | 46,5 | 33,21 |
| Pf-Pi (bars) | 136,95 | 13,28 |
| Mt (kg) | 2,43 | 2,79 |
| Indice de filtrabilité F ($kg^{-1}$) | 1,21 | 0,14 |

On observe ainsi une filtrabilité de la composition bien meilleure avec la composition selon l'invention, dans laquelle la tourmaline a été introduite dans le procédé de polymérisation, par rapport aux compositions dans lesquelles la tourmaline a été introduite par mélange avec la matrice polyamide.

Cette meilleure filtrabilité permet d'augmenter la durée de vie des filtres, et d'améliorer le procédé de filage, en limitant les augmentations de pression de pack de filage, et les casses des filaments/fibres,/fils obtenus.

**Exemple 5 : Préparation d'une suspension de sulfate de baryum (slurry)**

La suspension est préparée par mélange de 2,13 kg de sulfate de baryum sous forme de poudre et de 8,52 kg de la solution de pyrophosphate de sodium dans l'eau, à une concentration de 0,18% en poids telle que préparée à l'exemple 1. Le mélange est maintenu sous agitation (1500 tours par minute) pendant 3 heures.

**Exemple 6 : Préparation d'une suspension de tourmaline et de sulfate de baryum (slurry)**

La suspension de tourmaline de l'exemple 1 est diluée à 20% à l'aide d'une solution de pyrophosphate de sodium dans l'eau, à une concentration de 0,18% en poids telle que préparée à l'exemple 1.

La suspension est préparée par mélange de 20 kg de cette suspension à 20% et de 40 kg de la suspension de sulfate de baryum de l'exemple 5. Le mélange est maintenu sous agitation (1500 tours par minute) pendant 3 heures.

**Exemple 7 : Préparation d'une suspension de tourmaline et de dioxyde de titane (slurry)**

La suspension de tourmaline de l'exemple 1 est diluée à 20% à l'aide d'une solution de pyrophosphate de sodium dans l'eau, à une concentration de 0,18% en poids telle que préparée à l'exemple 1.

La suspension est préparée par mélange de 5 kg de cette suspension à 20% et de 75 kg d'une suspension aqueuse de dioxyde de titane à 20%. Le mélange est maintenu sous agitation (1500 tours par minute) pendant 3 heures.

**Exemple 8: Préparation d'une suspension de tourmaline, de sulfate de baryum et de dioxyde de titane (slurry)**

La suspension de tourmaline de l'exemple 1 est diluée à 20% à l'aide d'une solution de pyrophosphate de sodium dans l'eau, à une concentration de 0,18% en poids telle que préparée à l'exemple 1.

La suspension est préparée par mélange de 60 kg de cette suspension à 20%, de 15kg de la suspension de sulfate de baryum de l'exemple 5, et de 15 kg d'une suspension aqueuse de dioxyde de titane à 20%. Le mélange est maintenu sous agitation (1500 tours par minute) pendant 3 heures.

### Exemple 9: PA 66 comprenant de la tourmaline introduite à la polymérisation

On fabrique un copolymère à base de polyamide 66 comme dans l'exemple 2, sauf que l'on introduit, après au moins 10 min de distillation sous pression, la suspension de l'exemple 7 ; à la place de la suspension de l'exemple 1 et de la suspension de dioxyde de titane.

On obtient un polyamide comprenant 1,5% de dioxyde de titane et 0,1% de tourmaline.

### Exemple 10 à 12 : PA 66 comprenant de la tourmaline et du sulfate de baryum introduits à la polymérisation

On fabrique un copolymère à base de polyamide 66 comme dans l'exemple 2, sauf que l'on introduit, après au moins 10 min de distillation sous pression, à la place de la suspension de l'exemple 1 et de la suspension de dioxyde de titane :

- exemple 10 : la suspension de l'exemple 5, la suspension de l'exemple 1 et la suspension aqueuse de dioxyde de titane à 20%. On obtient un polyamide comprenant 1,7% de dioxyde de titane, 1% de tourmaline et 0,3% de sulfate de baryum.
- exemple 11 : la suspension de l'exemple 6 et la suspension aqueuse de dioxyde de titane à 20%. On obtient un polyamide comprenant 1,5% de dioxyde de titane, 0,4% de tourmaline et 0,8% de sulfate de baryum.
- exemple 12: la suspension de l'exemple 8. On obtient un polyamide comprenant 0,3% de dioxyde de titane, 1,2% de tourmaline et 0,3% de sulfate de baryum.

### Exemple 13 : PA 66 comprenant de la tourmaline introduite à la polymérisation et du sulfate de baryum introduit à l'extrusion

On fabrique un copolymère à base de polyamide 66 comme dans l'exemple 2, sauf que l'on introduit, après au moins 10 min de distillation sous pression, la suspension de l'exemple 7 ; à la place de la suspension de l'exemple 1 et de la suspension de dioxyde de titane.

Le polyamide obtenu est mélangé à un masterbatch de sulfate de baryum (40% de sulfate de baryum et 60% de polyamide 66), de façon à ce que la composition massique finale soit de 1,5 % de $TiO_2$, 0,1% de tourmaline et 0,8% de sulfate de baryum. Le mélange est ensuite refondu dans une extrudeuse monovis et extrudé dans les mêmes conditions qu'à l'exemple 3.

### Exemple 14 : PA 66 comprenant de la tourmaline introduite à la polymérisation et du sulfate de baryum introduit à l'extrusion

On fabrique un copolymère à base de polyamide 66 comme dans l'exemple 2.

Le polyamide obtenu est mélangé à un masterbatch de sulfate de baryum (40% de sulfate de baryum et 60% de polyamide 66), de façon à ce que la composition massique finale soit de 0,4 % de $TiO_2$, 0,7% de tourmaline et 1,5% de sulfate de baryum. Le mélange est ensuite refondu dans une extrudeuse monovis et extrudé dans les mêmes conditions qu'à l'exemple 3.

### Revendications

1. Procédé de fabrication d'une composition à base de matrice polymérique thermoplastique contenant de la tourmaline, **caractérisé par le fait que** l'on introduit avant ou pendant la polymérisation de ladite matrice polymérique, une suspension contenant de la tourmaline.

2. Procédé selon la revendication 1, **caractérisé en ce que** la suspension contient également du sulfate de baryum.

3. Procédé selon l'une des revendications précédentes, **caractérisé en ce que** la matrice polymérique thermoplastique est choisie dans le groupe comprenant : les polyamides ; les polyesters ; les polyvinyliques ; les chlorures de polyvinyle ; les acétates de polyvinyle ; les alcools polyvinylique ; les polymères acryliques tels que les copolymères PMMA, SAN, ABS ; les polyoléfines telles que le polyéthylène, le polypropylène et le polybutylène ; les dérivés cellulosiques tels que l'acétate de cellulose, les plastiques cellulose-ester ; les polyuréthanes ; leurs copolymères et/ou mélanges.

4. Procédé selon l'une des revendications précédentes, **caractérisé en ce que** la matrice polymérique thermoplastique est choisie dans le groupe comprenant : le polyamide 6, le polyamide 6.6, le polyamide 11, le polyamide 12, le polyéthylène téréphtalate (PET), le polybutylène téréphtalate (PBT), le polytriméthylène téréphtalate (PTT), leurs copolymères et/ou leurs mélanges.

5. Procédé selon la revendication 4, **caractérisé en ce que** le procédé de polymérisation de polyamide 66 comprend une étape de concentration du sel N (sel d'adipate d'hexaméthylène diamine) et une étape de polycondensation comprenant les phases suivantes : une phase de distillation sous pression, une phase de décompression, une phase de finition et éventuellement une phase d'extrusion ou de mise en forme ; ladite suspension étant ajoutée au cours de la phase de distillation.

6. Procédé selon la revendication 4, **caractérisé en ce que** le procédé de polymérisation de polyamide 6 comprend une étape de mélange du caprolactame fondu avec de l'eau et éventuellement des limiteurs de chaînes, une étape de chauffage, éventuellement une étape d'augmentation de la pression suivie d'une étape de décompression, éventuellement une étape de finition sous vide, une étape d'extraction, et une étape de séchage ; ladite suspension étant ajoutée à l'étape initiale de mélange du caprolactame fondu avec de l'eau et éventuellement des limiteurs de chaînes.

7. Procédé selon la revendication 3 ou 4, **caractérisé en ce que** le procédé de polymérisation, de polyester comprend une étape de mélange, une étape de transestérfication ou d'estérification, éventuellement une étape de concentration, et une étape de polycondensation sous vide; ladite suspension étant ajoutée avant ou juste avant la phase de polycondensation.

8. Procédé selon l'une des revendications précédentes, **caractérisé en ce que** ladite suspension comprend, outre la tourmaline, de l'eau et/ou au moins un composé choisi parmi le groupe comprenant : des agents tensioactifs, des solvants organiques et/ou des monomères de matrice polymérique.

9. Procédé selon l'une des revendications précédentes, **caractérisé en ce que** ladite suspension comprend de l'eau et éventuellement du caprolactame et/ou un tensio-actif.

10. Procédé selon l'une des revendications précédentes, **caractérisé en ce que** ladite suspension comprend au moins, outre la tourmaline, de l'eau et un agent tensioactif.

11. Procédé selon l'une des revendications précédentes, **caractérisé en ce que** ladite suspension comprend de l'eau et/ou du caprolactame.

12. Procédé selon l'une des revendications précédentes, **caractérisé en ce que** la tourmaline est sous forme de particules consistant en des cristaux de tourmaline, éventuellement enrobées par au moins un composé minéral et/ou organique.

13. Procédé selon la revendication 12, **caractérisé en ce que** les particules présentent un diamètre moyen (d50) inférieur ou égal à 2 $\mu$m, de préférence inférieur ou égal à 0,8 $\mu$m.

14. Procédé selon l'une des revendications précédentes, **caractérisé en ce que** la suspension comprend de 5 à 50 % en poids de tourmaline, préférentiellement de 10 à 40%, par rapport au poids total de la suspension.

15. Procédé selon l'une des revendications précédentes, **caractérisé en ce que** la composition à base de matrice polymérique thermoplastique comprend de 0,01 à 10 % en poids de tourmaline.

16. Composition à base de matrice polymérique thermoplastique contenant de la tourmaline susceptible d'être obtenue par le procédé selon l'une quelconque des revendications 1 à 15.

17. Utilisation de la composition à base de matrice thermoplastique contenant de la tourmaline obtenue par le procédé de fabrication selon l'une quelconque des revendications 1 à 15 pour la fabrication d'articles, tels que des fils fibres et/ou filaments, films et articles moulés.

## Patentansprüche

1. Verfahren zur Herstellung einer Zusammensetzung auf Basis einer thermoplastischen Polymermatrix, die Turmalin enthält, **dadurch gekennzeichnet, dass** man vor oder während der Polymerisation der Polymermatrix eine Turmalin enthaltende Suspension einträgt.

2. Verfahren nach Anspruch 1, **dadurch gekennzeichnet, dass** die Suspension außerdem Bariumsulfat enthält.

3. Verfahren nach einem der vorhergehenden Ansprüche, **dadurch gekennzeichnet, dass** die thermoplastische Polymermatrix aus der Gruppe umfassend Polyamide; Polyester; Polyvinyle; Polyvinylchloride; Polyvinylacetate; Polyvinylalkohole; Acrylpolymere wie PMMA-, SAN- oder ABS-Copolymere; Polyolefine wie Polyethylen, Polypropylen und Polybutylen; Cellulosederivate wie Celluloseacetat, Cellulose-ester-Kunststoffe; Polyurethane; Copolymere davon und/oder Mischungen davon ausgewählt wird.

4. Verfahren nach einem der vorhergehenden Ansprüche, **dadurch gekennzeichnet, dass** die thermoplastische Polymermatrix aus der Gruppe umfassend Polyamid 6, Polyamid 6.6, Polyamid 11, Polyamid 12, Polyethylenterephthalat (PET), Polybutylenterephthalat (PBT), Polytrimethylenterephthalat (PTT), Copolymere davon und/oder Mischungen davon ausgewählt wird.

5. Verfahren nach Anspruch 4, **dadurch gekennzeichnet, dass** das Verfahren zur Polymerisation von Polyamid 66 einen Schritt des Aufkonzentrierens von N-Salz (Hexamethylendiaminadipatsalz) und einen Schritt der Polykondensation mit den folgenden Phasen umfasst: einer Druckdestillationsphase, einer Entspannungsphase, einer Endbehandlungsphase und gegebenenfalls einer Extrusions- oder Formgebungsphase, wobei die Suspension während der Destillationsphase zugegeben wird.

6. Verfahren nach Anspruch 4, **dadurch gekennzeichnet, dass** das Verfahren zur Polymerisation von Polyamid 6 einen Schritt des Mischens von schmelzflüssigem Caprolactam mit Wasser und gegebenenfalls Kettenabbruchmitteln, einen Erhitzungsschritt, gegebenenfalls einen Druckerhöhungsschritt gefolgt von einem Entspannungsschritt, gegebenenfalls einen Vakuumendbehandlungsschritt, einen Extraktionsschritt und einen Trocknungsschritt umfasst; wobei die Suspension während des anfänglichen Schritts des Mischens von schmelzflüssigem Caprolactam mit Wasser und gegebenenfalls Kettenabbruchmitteln zugegeben wird.

7. Verfahren nach Anspruch 3 oder 4, **dadurch gekennzeichnet, dass** das Verfahren zur Polymerisation von Polyester einen Mischschritt, einen Umesterungs- oder Veresterungsschritt, gegebenenfalls einen Aufkonzentrierungsschritt und einen Vakuumpolykondensationsschritt umfasst; wobei die Suspension vor oder unmittelbar vor der Polykondensationsphase zugegeben wird.

8. Verfahren nach einem der vorhergehenden Ansprüche, **dadurch gekennzeichnet, dass** die Suspension neben Turmalin Wasser und/oder mindestens eine Verbindung aus der Gruppe umfassend Tenside, organische Lösungsmittel und/oder Polymermatrix-Monomere umfasst.

9. Verfahren nach einem der vorhergehenden Ansprüche, **dadurch gekennzeichnet, dass** die Suspension Wasser und gegebenenfalls Caprolactam und/oder ein Tensid umfasst.

10. Verfahren nach einem der vorhergehenden Ansprüche, **dadurch gekennzeichnet, dass** die Suspension neben Turmalin mindestens Wasser und ein Tensid umfasst.

11. Verfahren nach einem der vorhergehenden Ansprüche, **dadurch gekennzeichnet, dass** die Suspension Wasser und/oder Caprolactam umfasst.

12. Verfahren nach einem der vorhergehenden Ansprüche, **dadurch gekennzeichnet, dass** das Turmalin in Form von Teilchen vorliegt, die aus Turmalinkristallen bestehen, die gegebenenfalls mit mindestens einer anorganischen und/oder organischen Verbindung überzogen sind.

13. Verfahren nach Anspruch 12, **dadurch gekennzeichnet, dass** die Teilchen einen mittleren Durchmesser (d50)

kleiner gleich 2 μm und vorzugsweise kleiner gleich 0,8 μm aufweisen.

14. Verfahren nach einem der vorhergehenden Ansprüche, **dadurch gekennzeichnet, dass** die Suspension 5 bis 50 Gew.-% Turmalin, vorzugsweise 10 bis 40 Gew.-%, bezogen auf das Gesamtgewicht der Suspension, umfasst.

15. Verfahren nach einem der vorhergehenden Ansprüche, **dadurch gekennzeichnet, dass** die Zusammensetzung auf Basis einer thermoplastischen Polymermatrix 0,01 bis 10 Gew.-% Turmalin umfasst.

16. Zusammensetzung auf Basis einer thermoplastischen Polymermatrix, die Turmalin enthält und durch das Verfahren nach einem der Ansprüche 1 bis 15 erhältlich ist.

17. Verwendung der durch das Herstellungsverfahren nach einem der Ansprüche 1 bis 15 erhaltenen Zusammensetzung auf Basis einer thermoplastischen Polymermatrix, die Turmalin enthält, zur Herstellung von Artikeln, wie Fäden, Fasern und/oder Filamenten, Folien und Formkörpern.

## Claims

1. Method for producing a composition based on a thermoplastic polymeric matrix containing tourmaline, **characterized in that** a suspension containing tourmaline is introduced before or during the polymerization of said polymeric matrix.

2. Method according to Claim 1, **characterized in that** the suspension also contains barium sulphate.

3. Method according to one of the preceding claims, **characterized in that** the thermoplastic polymeric matrix is chosen from the group comprising: polyamides; polyesters; polyvinyls; polyvinyl chlorides; polyvinyl acetates; polyvinyl alcohols; acrylic polymers such as the PMMA, SAN or ABS copolymers; polyolefins such as polyethylene, polypropylene and polybutylene; cellulosic derivatives such as cellulose acetate, cellulose ester plastics; polyurethanes; copolymers thereof and/or blends thereof.

4. Method according to one of the preceding claims, **characterized in that** the thermoplastic polymeric matrix is chosen from the group comprising: polyamide 6, polyamide 66, polyamide 11, polyamide 12, polyethylene terephthalate (PET), polybutylene terephthalate (PBT), polytrimethylene terephthalate (PTT), copolymers thereof and/or blends thereof.

5. Method according to Claim 4, **characterized in that** the polyamide 66 polymerization method comprises an N salt (hexamethylenediamine adipate salt) concentration step and a polycondensation step comprising the following phases: a phase of distillation under pressure, a decompression phase, a finishing phase and, optionally, an extrusion or forming phase, said suspension being added during the distillation phase.

6. Method according to Claim 4, **characterized in that** the polyamide 6 polymerization method comprises a step of mixing molten caprolactam with water and, optionally, chain limiters, a heating step, optionally a pressure increase step followed by a decompression step, optionally a finishing step under vacuum, an extraction step and a drying step, said suspension being added in the initial step of mixing molten caprolactam with water and, optionally, chain limiters.

7. Method according to Claim 3 or 4, **characterized in that** the polyester polymerization method comprises a blending step, a transesterification or esterification step, optionally a concentration step, and a polycondensation step under vacuum, said suspension being added before or just before the polycondensation phase.

8. Method according to one of the preceding claims, **characterized in that** said suspension comprises in addition to tourmaline, water and/or at least one compound chosen from the group comprising: surfactants, organic solvents and/or polymeric matrix monomers.

9. Method according to one of the preceding claims, **characterized in that** said suspension comprises water and, optionally, caprolactam and/or a surfactant.

10. Method according to one of the preceding claims, **characterized in that** said suspension comprises at least, in addition to tourmaline, water and a surfactant.

**11.** Method according to one of the preceding claims, **characterized in that** said suspension comprises water and/or caprolactam.

**12.** Method according to one of the preceding claims, **characterized in that** the tourmaline is in the form of particles constituted of tourmaline crystals, optionally coated with at least one inorganic and/or organic compound.

**13.** Method according to Claim 12, **characterized in that** the particles have an average diameter (d50) of less than or equal to 2 $\mu$m, preferably less than or equal to 0.8 $\mu$m.

**14.** Method according to one of the preceding claims, **characterized in that** the suspension comprises from 5% to 50% by weight of tourmaline, preferentially from 10% to 40%, relative to the total weight of the suspension.

**15.** Method according to one of the preceding claims, **characterized in that** the composition based on a thermoplastic polymeric matrix comprises from 0.01% to 10% by weight of tourmaline.

**16.** Composition based on a thermoplastic polymeric matrix containing tourmaline, that can be obtained by means of the method according to any one of Claims 1 to 15.

**17.** Use of the composition based on a thermoplastic matrix containing tourmaline, obtained by means of the method of production according to any one of Claims 1 to 15, for the production of articles such as yarns, fibres and/or filaments, films and moulded articles.